# EUROPÄISCHE PATENTSCHRIFT

(11) **EP 1 736 350 B1**
(45) Veröffentlichungstag und Bekanntmachung des Hinweises auf die Patenterteilung: **12.01.2011**
(21) Anmeldenummer: 06012207.4
(22) Anmeldetag: 14.06.2006
(51) Int. Cl.: B60K 15/00, B60K 15/03

(54) **Kraftfahrzeug mit einem Reduktionsmittelraum für eine Abgasreinigungsanlage**
Vehicle with a reducing agent reservoir for an exhaust gas cleaning device
Véhicule avec un réservoir d'agent réducteur pour un dispositif d'épuration de gaz d'échappement

(30) Priorität: 24.06.2005 DE 102005029415
(43) Veröffentlichungstag der Anmeldung: 27.12.2006
(73) Patentinhaber: MAN Nutzfahrzeuge Aktiengesellschaft, 80976 München (DE)
(72) Erfinder: Ehrmann, Robert, 85298 Mitterscheyern (DE); Martin, Gerhard, 81378 München (DE); Teubner, Daniel, 85276 Pfaffenhofen (DE); Eckert, Reinhard, 82178 Puchheim (DE)

(56) Entgegenhaltungen:
- EP-A- 0 547 745
- EP-A- 1 503 055
- WO-A-2006/045672
- DE-A1- 10 323 072
- FR-A- 2 834 006
- US-A- 5 496 069
- US-B1- 6 223 526

## Beschreibung

Die Erfindung betrifft ein Kraftfahrzeug mit einer Brennkraftmaschine mit Merkmalen gemäß des Oberbegriffes des Anspruches 1.

Bei einem derartigen aus EP 1 503 055 A1 bekannten Kraftfahrzeug mit einer Brennkraftmaschine, die aus einem Kraftstoffraum mit Kraftstoff versorgbar ist, ist eine mit einem Reduktionsmittel betriebene Abgasreinigungsanlage vorgesehen, die zum Reinigen des Abgases der Brennkraftmaschine dient. Für die Bevorratung des Reduktionsmittels ist ein Reduktionsmittelraum vorgesehen, der zusammen mit dem Kraftstoffraum zu einer Baueinheit zusammengefasst ist. Der Kraftstoffraum ist als geschlossener erster Tankabschnitt vorgesehen, an dessen eines stirnseitiges Ende sich ein einseitig offener zweiter Tankabschnitt anschließt, welcher zur Aufnahme eines das Reduktionsmittel aufnehmenden separaten Innentanks dient.

Es ist Aufgabe der Erfindung, ein Kraftfahrzeug der eingangs genannten Art zu schaffen, bei dem die Bevorratung des für den Betrieb der Abgasreinigungsanlage vorgesehenen Reduktionsmittels durch einfache Anordnung des Innentanks im zweiten Tankabschnitt erreicht wird.

Diese Aufgabe wird erfindungsgemäß durch die Merkmale des Anspruchs 1 gelöst.

Das Kraftfahrzeug weist eine Brennkraftmaschine auf, die aus einem Kraftstoffraum mit Kraftstoff versorgbar ist und die mit einer mit einem Reduktionsmittel betreibbaren Abgasreinigungsanlage ausgestattet ist. Die Abgasreinigungsanlage ist zum Reinigen des Abgases der Brennkraftmaschine vorgesehen, wobei für die Bevorratung des Reduktionsmittels ein Reduktionsmittelraum vorgesehen ist, der zusammen mit dem Kraftstoffraum zu einer Baueinheit zusammengefasst ist. Als Kraftstoffraum ist dabei ein geschlossener erster Tankabschnitt vorgesehen, an dessen zumindest einem stirnseitigen Ende sich ein einseitiger offener zweiter Tankabschnitt anschließt. Dieser ist als Behausung für die Aufnahme eines separaten Innentanks vorgesehen, wobei der separate Innentank den Reduktionsmittelraum bildet.

Infolge des Vorsehens eines separaten Innentanks zur Bevorratung des Reduktionsmittels können die ansonsten bei Kombitanks ggf. auftretenden Mängel wie bspw. Durchmischung der unterschiedlichen Betriebsmittel infolge von Leckagen wirksam vermieden werden.

Durch die Anbringung des separaten Innentanks Im zweiten Tankabschnitt können ansonsten erforderliche zusätzliche Halter entfallen. Die doppelte Behausung des Reduktionsmittels durch den separaten Innentank und den zweiten Tankabschnitt ermöglicht eine gute Temperaturisolation des Reduktionsmittels. Weitere, am separaten Innentank vorgesehene Baueinheiten können platzsparend und optisch ansprechend im zweiten Tankabschnitt untergebracht werden.

Erfindungsgemäß erfoglt die Befestigung des separaten Innentanks im offenen Tankabschnitt durch Formschluss, wobei der separate Innentank mittels im zweiten Tanksabschnitt vorgesehener Aufhängungen fixiert und befestigt ist. Desweiteren können ggf. zusätzlich Befestigungsmittel vorgesehen sein, mittels dieser der separate Innentank an den Aufhängungen und/oder am zweiten Tankabschnitt befestigt ist.

Die Aufhängungen können Bestandteil des zweiten Tankabschnittes sein oder als separate Bauteile am zweiten Tankabschnitt mittels Verschraubung, Verklebung, Vernietung, Verschweißung oder Clipsverbindung oder dgl. befestigt sein. Im Fall des Ausgestaltens der Aufhängungen als Bestandteil des zweiten Tankabschnittes können diese Aufhängungen abschnittsweise in die Wandung des zweiten Tankabschnittes als Einbuchtungen eingearbeitet sein.

Erfindungsgemäß sind die Aufhängungen im oberen Bereich des zweiten Tankabschnittes angeordnet, wobei sie den separaten Innentank in einer Hängeposition abstützen und fixieren. Der separate Innentank weist speziell ausgestaltete Ausnehmungen auf, die mit an den Aufhängungen gebildeten Halteprofilen zumindest bereichsweise formschlüssig korrespondieren.

Gemäß einer weiteren Ausgestaltung der Erfindung kann der separate Innentank durch einen zwischen Innentank und zweitem Tankabschnitt gebildeten Zwischenraum gegenüber seiner Umgebung temperaturisoliert sein. Desweiteren kann in diesem Zwischenraum ggf. zusätzlich Isolationsmaterial angeordnet sein.

Gemäß einer weiteren Ausgestaltung der Erfindung kann entweder in separaten Innentank oder im Zwischenraum zwischen separatem Innentank und zweitem Tankabschnitt eine Heizung zwecks Erwärmung des darin befindlichen Reduktionsmittels vorgesehen sein.

Gemäß einer weiteren Ausgestaltung der Erfindung kann wenigstens der separate Innentank Befüllungs- und Entnahmeeinheiten, und ggf. Rücklaufsysteme und ggf. einen Sensor, bspw. für Tankgeber oder Temperaturmessung aufweisen.

Gemäß einer weiteren Ausgestaltung der Erfindung kann der separate Innentank bspw. Befüllungs- und Entnahmeeinheiten sowie ggf. vorgesehene Rücklaufsysteme und einen Sensor aufweisen, die im Bereich des Zwischenraumes angeordnet sind. Als Rücklaufsysteme können bspw. bekannte Rücklaufleitungen vorgesehen sein.

Gemäß einer weiteren Ausgestaltung der Erfindung kann der den offenen zweiten Tankabschnitt verschließende separate Abschlussdeckel entweder lösbar - bspw. durch Verschrauben, oder durch Schnappverbindungen - oder im Falle des Vorsehens eines separaten Abschlussdeckels bleibend - bspw. durch Kleben oder Nieten - mit dem offenen zweiten Tankabschnitt verbunden sein.

Gemäß einer weiteren Ausgestaltung der Erfindung können sich endseitig des ersten und/oder zweiten Tankabschnittes weitere dritte Tankabschnitte ggf. unterschiedlicher Befüllungsart anschließen

Gemäß einer weiteren Ausgestaltung der Erfindung kann wenigstens der erste und der zweite Tankabschnitt entweder ein gemeinsames Bauteil bilden oder es können der erste und der zweite Tankabschnitt einzelne Bauteile bilden, die durch Verschraubung, Verschweißung oder sonstwie geeigneter Mittel miteinander verbunden sind.

Gemäß einer weiteren Ausgestaltung der Erfindung kann bei dem zweiten offenen Tankabschnitt zwecks Aufnahme des separaten Innentanks entweder endseitig oder an seinem Umfang eine Öffnung vorgesehen sein, die durch den Abschlussdeckel verschließbar ist.

Gemäß einer weiteren Ausgestaltung der Erfindung kann das Kraftfahrzeug durch einen Lastkraftwagen oder Omnibus gegeben sein.

Nachfolgend ist die erfindungsgemäße Lösung näher erläutert. Es zeigt:
- Fig. 1: eine einen Kraftstoffraum K und einen Redukti- onsmittelraum R zusammenfassenden Baueinheit, welche nicht Teil der Erfindung ist,
- Fig. 2: ausschnittsweise und schematisch eine Ausführungsform einer Bau- einheit, welche Teil der Erfindung ist,
- Fig. 3: schematisch einen Querschnitt durch einen Reduktionsmittelraum R der in Figur 2 gezeigten Ausführungsform,
- Fig. 4: schematisch und im Querschnitt den Reduktionsmittelraum R gemäß Fig. 3 mit einer zusätzlichen Heizung,
- Fig. 5: schematisch einen Reduktionsmittelraum R gemäß Fig. 3 mit einem zusätzli- chen Füllstandssensor,
- Fig. 6: schematisch und im Querschnitt einen Reduktionsmittelraum R gemäß Fig. 5 mit einer zusätzlichen Rücklaufleitung,
- Fig. 7: schematisch und im Querschnitt eine Ausführungsform eines Redukti- onsmittelraumes R mit einer unterseitigen Abstützung, welche kein Teil der Erfindung ist,
- Fig. 8: schematisch und im Querschnitt eine vierte Ausführungsform einer einen zu- sätzlichen Tankabschnitt aufweisenden Baueinheit,
- Fig. 9: ausschnittsweise und in Seitenansicht ein einen Innentank des Reduktionsmit- telraumes R am zweiten Tankabschnitt befestigendes Befestigungsmittel,
- Fig. 10: ausschnittsweise und in Schnittdarstellung einen zur Befestigung des Befesti- ungsmittels vorgesehenen Wandabschnitt des Innentanks,
- Fig. 11: schematisch und in Perspektivansicht ein Befestigungsmittel.

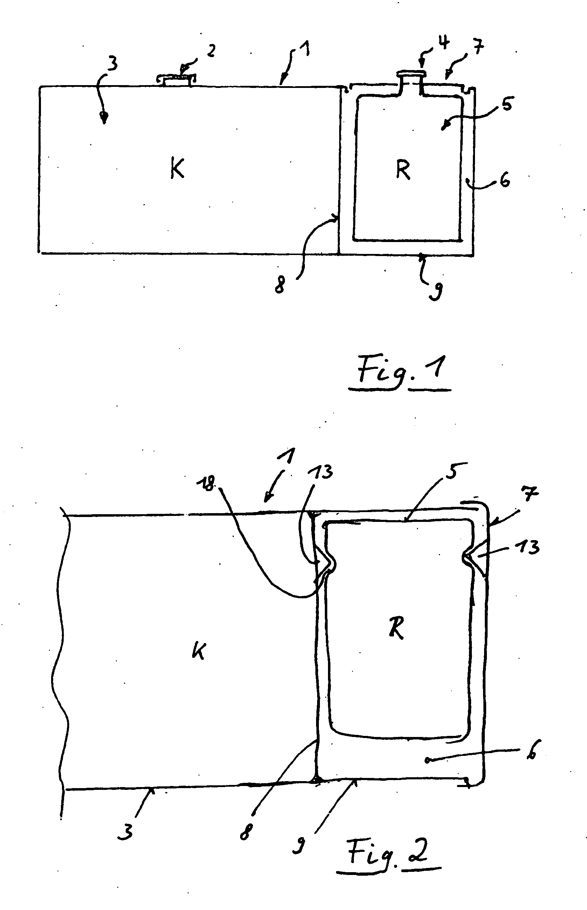

In Fig. 1 ist schematisch und in Seitenansicht eine sowohl einen Reduktionsmittelraum R als auch einen Kraftstoffraum K aufweisende Baueinheit 1 gezeigt. Aus dem Kraftstoffraum K ist eine Brennkraftmaschine eines Kraftfahrzeuges mit Kraftstoff versorgbar. Zum Reinigen des Abgases der Brannkraftmaschlne ist eine hier nicht gezeigte Abgasreinigungsanlage vorgesehen, die mit einem Reduktionsmittel aus dem Reduktionsmittelraum R betreibbar ist. Bei der hier gezeigten, sowohl einen Kraftstoffraum K als auch einen Reduktionsmittelraum R aufweisenden Baueinheit 1 ist der Kraftstoffraum K als ein geschlossener erster Tankabschnitt 3 ausgebildet. An diesem ersten Tankabschnitt 3 ist an dessen einem stirnseitigen Ende ein einseitig offener zweiter Tankabschnitt 9 angeschlossen. Dieser ist als Behausung für die Aufnahme eines separaten Innentanks 5 vorgesehen. Der separate Innentank 5 bildet den Reduktionsmitteiraum R. Der den separaten Innentank 5 behausende einseitig offene Tankabschnitt 9 ist hier mittels eines Abschtussdeckets 7 verschließbar. Dieser Abschlussdeckel 7 ist in der hier gezeigten Version oberseitig des offenen Tankabschnitts 9 angeordnet und weist eine hier nicht näher bezeichnete Öffnung für den Durchtritt einer dem separaten Innentank 5 zugeordneten Befüllungseinheit 4 auf. Der separate Abschlussdeckel 7 ist durch hier nicht näher bezeichnete Befestigungsmittel am offenen zweiten Tankabschnitt 9 befestigt und kann ggf. zusätzlich zur Fixierung des Innentanks 5 im zweiten Tankabschnitt 9 genutzt werden. Der den Kraftstoffraum K bildende geschlossene erste Tankabschnitt 3 weist in diesem Ausführungsbeispiel oberseitig eine Befüllungseinheit 2 auf. Der geschlossene erste Tankabschnitt 3 weist zur Seite des zweiten offenen Tankabschnitts 9 hin eine Zwischenwand 8 auf.

In Fig. 2 ist ausschnittsweise und schematisch in einer Seitenansicht eine Ausführungsform einer Baueinheit 1 gezeigt. In dieser Ausführungsform ist der den Reduktionsmittelraum R bildende separate Innentank 5 von oberseitig im zweiten Tankabschnitt 9 abragenden Aufhängungen 13 im zweiten Tankabschnitt 9 gehalten und fixiert. In dieser Ausführungsform ist der einseitig offene zweite Tankabschnitt 9 zu seinem stirnseitigen Endabschnitt hin offen ausgeführt. In diese, hier nicht näher bezeichnete stirnseitige Öffnung kann der separate Innentank 5 stirnseitig in den offenen zweiten Tankabschnitt 9 eingeführt werden. Der hier stirnseitig angeordnete Abschlussdeckel 7 verschließt die stirnseitige Öffnung des offenen zweiten Tankabschnitts 9 und wird zur zusätzlichen Fixierung des Innentanks 5 im zweiten Tankabschnitt 9 genutzt. Dabei weist der hier gezeigte Abschlussdeckel 7 innenseitig Aufhängungen 13 auf, mittels dieser der separate Innentank 5 im offenen zweiten Tankabschnitt 9 fixiert und gehalten ist. Der separate Innentank 5 weist zur Aufnahme mittels dieser Aufhängungen 13 an seinem Umfang Ausnehmungen 18 auf, die zu letzteren in etwa komplementär ausgeführt sind. In diese, am separaten Innentank 5 gebildeten Ausnehmungen 18 sind die Aufhängungen 13 in etwa formschlüssig einführbar. Der den Reduktionsmitteiraum R bildende separate Innentank 5 ist gegenüber dem einseitig offenen zweiten Tankabschnitt 9 solcherart querschnittskleiner ausgeführt, so dass zwischen separatem Innentank 5 und zweitem Tankabschnitt 9 ein Zwischenraum 6 gebildet ist. Dieser kann u. a. zu einer verbesserten Temperaturisolierung des im Innentank bevorrateten Reduktionsmittels genutzt werden.

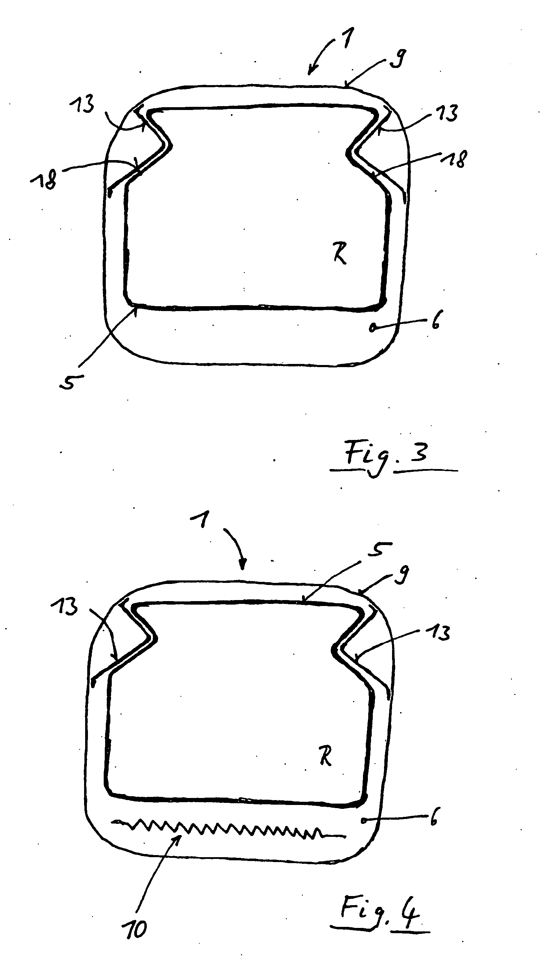

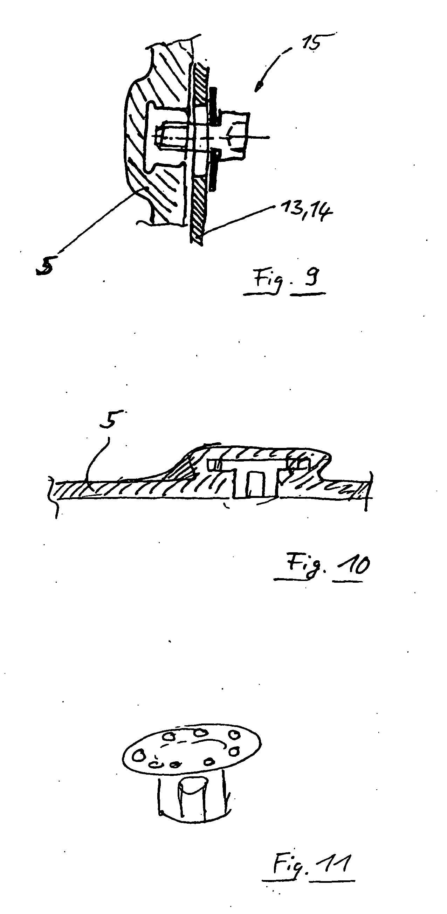

In Fig. 3 ist schematisch und in einer Seitenansicht der einseitig offene zweite Tankabschnitt 9 der Baueinheit 1 gezeigt. Innerhalb dieses zweiten Tankabschnitts 9 ist mittels der innenseitig an diesen angeordneten Aufhängungen 13 der den Reduktionsmitteiraum R bildende separate Innentank 5 fixiert und gehalten. Der separate Innentank 5 weist zwecks seiner Halterung im zweiten Tankabschnitt 9 oberseitig angeordnete Ausnehmungen 18 auf, in diese die Aufhängungen 13 zumindest abschnittsweise formschlüssig eingreifen und auf diese Weise den separaten Innentank 5 im zweiten Tankabschnitt 9 haltern. Die Aufhängungen 13 können entweder Bestandteil des zweiten Tankabschnittes 9 sein oder als separate Bauteile an diesen zweiten Tankabschnitt 9 mittels zusätzlicher Verschraubung (Fig. 9 bis Fig. 11) Verklebung, Vernietung, Verschweißung oder Clipsverbindung oder dergleichen befestigt sein. Zwischen zweitem Tankabschnitt 9 und separatem Innentank 5 ist ein umlaufender Zwischenraum 6 gebildet. Dieser Zwischenraum kann - wie in Fig. 4 gezeigt - zur Anordnung einer zusätzlichen Heizung 10 vorgesehen sein. In Fig. 4 ist die Heizung 10 unterhalb des separaten Innentanks 5 angeordnet und kann zur Erwärmung des im separaten Innentank 5 bevorrateten Reduktionsmittels genutzt werden.

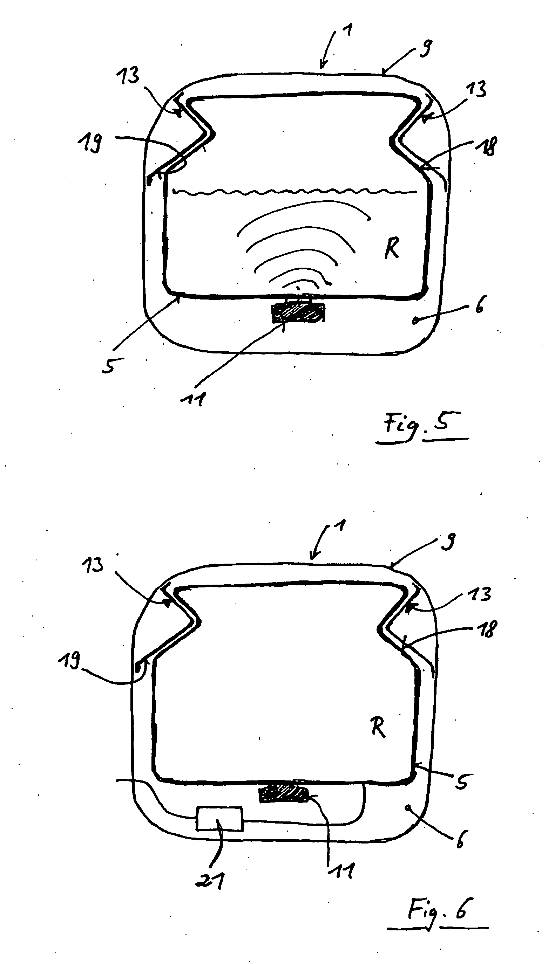

In Alternative zu der in Fig. 3 und Fig. 4 gezeigten Ausführungsbelspiele ist in Fig. 5 unterseitig des separaten Innentanks 5 ein zusätzlicher Sensor 11 angeordnet, der sich im Zwischenraum 6 zwischen separatem Innentank 5 und zweiten Tankabschnitt 9 befindet. Der Sensor 11 kann beispielsweise zur Bestimmung des Füllstandes oder der Temperatur des im separaten Innentanks 5 befindlichen Reduktionsmittels genutzt werden.

In Fig. 6 ist zusätzlich zu dem in Fig. 5 gezeigten Sensor 11 ein Rücklaufsystem 21 angeordnet, welches sich ebenfalls unterseitig des separaten Innentanks 5 im Zwischenraum 6 befindet.

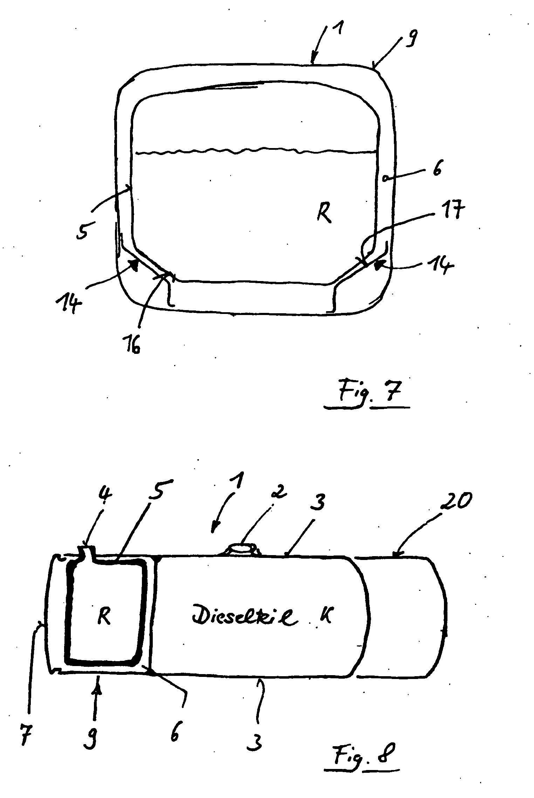

Im Unterschied zu dem in Fig. 2 bis Fig. 6 gezeigten Ausführungsbeispielen zeigt Fig. 7 eine nicht Teil der Erfindung bildende Anbringungsart des separaten Innentanks 5 im zweiten Tankabschnitt 9. In dem hier gezeigten Ausführungsbeispiel weist der separate Innentank 5 unterseitig gebildete schräge Auflageflächen 16 auf, die mit an der Innenseite des zweiten Tankabschnitts 9 angeordneten Auflageflächen 17 von hier angeordneten Aufhängungen 14 zumindest bereichsweise formschlüssig korrespondieren. Die im unteren Bereich des zweiten Tankabschnitts 9 angeordneten unteren Aufhängungen 14 befinden sich im Zwischenraum 6 und können entweder Bestandteil des zweiten Tankabschnittes 9 sein oder als separate Bauteile am zweiten Tankabschnitt mittels Verschraubung, Verklebung, Vernietung, Verschweißung oder Clipsverbindungen oder dergleichen befestigt sein.

In Fig. 8 ist in weiterer Alternative eine Baueinheit 1 gezeigt, die im Gegensatz zu dem in Fig. 1 gezeigten Ausführungsbeispiel auf der dem Reduktionsmittelraum R gegenüberliegenden Stirnseite des ersten Tankabschnitts 3 einen zusätzlichen dritten Tankabschnitt 20 aufweist. Dieser zusätzliche dritte Tankabschnitt 20 kann ggf. zur Bevorratung eines weiteren Betriebsmittels bspw. Hydrauliköl od. dgl. vorgesehen sein. Die in Fig. 8 gezeigte Baueinheit 1 weist, wie in Fig. 2 bereits gezeigt einen stirnseitig offenen zweiten Tankabschnitt 9 auf, der durch einen stirnseitig auf diesem aufsetzbaren Abschlussdeckel 7 verschließbar ist. Der stirnseitig offene zweite Tankabschnitt 9 behaust innenseitig den zur Bevorratung des Reduktionsmittels R vorgesehenen separaten Innentank 5 und weist oberseitig eine hier nicht näher bezeichnetet Durchtrittsöffnung für den Durchtritt der Befüllungseinheit 4 des separaten Innentanks 5 auf.

In Fig. 9 ist schematisch und in ausschnittswelser Schnittdarstellung ein Befestigungsmittel 15 gezeigt, welches hier durch eine Verschraubung realisiert ist. Mittels dieses Befestigungsmittels 15 kann der separate Innentank 5 zusätzlich zu seiner Anlage bzw. Fixierung mittels der Aufhängungen 13 an diesen verschraubt und gesichert werden. Die Aufhängungen 13 können innenseitig des zweiten Tankabschnittes 9 befestigt sein.

In Fig. 10 ist schematisch und in ausschnittsweiser Schnittdarstellung die dieses Befestigungsmittel 15 aufnehmende Wandung des separaten Innentanks 5 gezeigt.

In Fig. 11 ist schematisch und in Perspektivdarstellung ein in die Wandung des separaten Innentanks 5 einsetzbares, zusammen mit dem Befestigungsmittel 15 korrespondierendes Verschraubungselement gezeigt.

Unabhängig von der Ausführungsart der Baueinheit kann das diese Baueinheit 1 aufnehmende Kraftfahrzeug durch einen Lastkraftwagen oder durch einen Omnibus gegeben sein. Der zwischen zweitem Tankabschnitt 9 und separatem Innentank 5 gegebene Zwischenraum 6 kann zusätzlich - bereichsweise oder komplett - durch ein Ausschäumungsmaterial ausfüllbar sein. Das Ausschäummaterial kann neben Temperaturisolationseigenschaften auch eine tragende Funktion aufweisen. Als im Zwischenraum anordbare Sensoren können beispielsweise Tankgeber oder Temperaturfühler vorgesehen sein.

Der separate Innentank kann bspw. durch einen hierfür geeigneten Metallwerkstoff oder Kunststoff realisiert sein.

## Patentansprüche

1. Kraftfahrzeug mit einer Brennkraftmaschine, die aus einem Kraftstoffraum (K) mit Kraftstoff versorgbar ist, einer mit einem Reduktionsmittel betreibbaren Abgasreinigungsanlage, die zum Reinigen des Abgases der Brennkraftmaschine vorgesehen ist, und einem für die Bevorratung des Reduktionsmittels vorgesehenen Reduktionsmittelraum (R), der zusammen mit dem Kraftstoffraum (K) zu einer Baueinheit (1) zusammengefasst ist, wobei als Kraftstoffraum (K) ein geschlossener erster Tankabschnitt (3) vorgesehen ist, an dessen zumindest einem stirnseitigen Ende sich ein einseitig offener zweiter Tankabschnitt (9) anschließt, welcher als Behausung für die Aufnahme eines den Reduktionsmittelraum (R) bildenden separaten Innentanks (5) vorgesehen ist, **dadurch gekennzeichnet, dass** der separate Innentank (5) mittels im zweiten Tankabschnitt (9) vorgesehener Aufhängungen (13) in einer Hängeposition fixiert und befestigt ist, wobei die Aufhängungen (13) im oberen Bereich des zweiten Tankabschnittes (9) angeordnet sind und der separate Innentank (5) ausgestaltete Ausnehmungen (18) aufweist, die mit an den Aufhängungen (13) gebildeten Halteprofilen zumindest bereichsweise formschlüssig korrespondieren.

2. Kraftfahrzeug nach Anspruch 1, **dadurch gekennzeichnet, dass** der einseitig offene Tankabschnitt (9) mittels eines separaten Abschlussdeckels (7) verschließbar ist.

3. Kraftfahrzeug nach Anspruch 1 oder 2, **dadurch gekennzeichnet, dass** zusätzliche Befestigungsmittel (15) vorgesehen sind, mit denen der separate Innentank (5) an den Aufhängungen (13) und/oder am zweiten Tankabschnitt (9) befestigt ist.

4. Kraftfahrzeug nach Anspruch 1, **dadurch gekennzeichnet, dass** die Aufhängungen (13) Bestandteil des zweiten Tankabschnittes (9) sind oder als separate Bauteil am Tankabschnitt (9) mittels Verschraubung, Verklebung, Vernietung, Verschweißung oder Clipsverbindung oder dgl. befestigt sind.

5. Kraftfahrzeug nach einem der Ansprüche 1 bis 4, **dadurch gekennzeichnet, dass** der separate Innentank (5) durch einen zwischen Innentank (5) und zweitem Tankabschnitt (9) gebildeten Zwischenraum (6) gegenüber seiner Umgebung temperaturisoliert ist, und dass in diesem Zwischenraum (6) ggf. zusätzlich Isolationsmaterial angeordnet ist.

6. Kraftfahrzeug nach Anspruch 5, **dadurch gekennzeichnet, dass** entweder im separaten Innentank (5) oder im Zwischenraum (6) zwischen separatem Innentank (5) und zweitem Tankabschnitt (9) eine Heizung (10) zwecks Erwärmung des darin befindlichen Reduktionsmittels vorgesehen ist.

7. Kraftfahrzeug nach einem der Ansprüche 1 bis 6, **dadurch gekennzeichnet, dass** wenigstens der separate Innentank (5) Befüllungs- und Entnahmeeinheiten (4) und ggf. Rücklaufsysteme (21) und ggf. einen Sensor (11), bspw. für Tankgeber oder Temperaturmessung aufweist.

8. Kraftfahrzeug nach Anspruch 7 und nach Anspruch 5, **dadurch gekennzeichnet, dass** der Sensor (11) im Bereich des Zwischenraumes (6) angeordnet sind.

9. Kraftfahrzeug nach Anspruch 2 bis 8, wenn abhängig von Anspruch 2, **dadurch gekennzeichnet, dass** der den offenen zweiten Tankabschnitt (9) verschließende separate Abschlussdeckel (7) entweder lösbar oder bei dem separaten Abschlussdeckel (7) bleibend mit dem offenen zweiten Tankabschnitt (9) verbunden ist.

10. Kraftfahrzeug nach Anspruch 1 bis 9, **dadurch gekennzeichnet, dass** sich endseitig des ersten und/oder zweiten Tankabschnittes (3, 9) weitere dritte Tankabschnitte (20) unterschiedlicher Befüllungsart anschließen.

11. Kraftfahrzeug nach Anspruch 1 bis 10, **dadurch gekennzeichnet, dass** wenigstens der erste und der zweite Tankabschnitt (3, 9) entweder ein gemeinsames Bauteil bilden oder als einzelne miteinander verbundene Bauteile ausgebildet sind.

12. Kraftfahrzeug nach Anspruch 1 bis 11, wenn abhängig von Anspruch 2, **dadurch gekennzeichnet, dass** bei dem zweiten offenen Tankabschnitt (9) zwecks Aufnahme des separaten Innentanks (5) entweder endseitig oder an seinem Umfang eine Öffnung vorgesehen ist, die durch den Abschlussdeckel (7) verschließbar ist.

13. Kraftfahrzeug nach Anspruch 1 bis 12, **dadurch gekennzeichnet, dass** das Kraftfahrzeug als Lastkraftwagen oder Omnibus ausgebildet ist.

## Claims

1. Vehicle which is provided with an internal combustion engine, which engine can be supplied with fuel from a fuel chamber (K), with an exhaust gas cleaning system, which can be operated with a reducing agent, which system is provided for cleaning the exhaust gas of the internal combustion engine, and comprises a reducing agent reservoir (R) designed to supply a reducing agent, which reservoir forms a single housing (1) together with the fuel chamber (K), whereby a sealed initial tank section (3) is provided as the fuel chamber (K), to which first tank section a second tank section (9) that is open on one side is connected to at least one front-facing end, which second tank section is provided as the housing to accommodate a separate inner tank (5) acting as the reducing agent reservoir (R), **characterised in that** the separate inner tank (5) is fixed and secured in a suspended position by suspensions (13) provided in the second tank section (9), whereby the suspensions (13) are arranged in the upper area of the second tank section (9) and the separate inner tank (5) contains shaped recesses (18), which recesses correspond in a form-fitting manner, at least in some areas, to retaining profiles formed on the suspensions (13).

2. Vehicle in accordance with claim 1, **characterised in that** the tank section (9) that is open on one side can be locked with a separate end cover (7).

3. Vehicle in accordance with claims 1 or 2, **characterised in that** additional fastening equipment (15) is provided, with which the separate inner tank (5) is secured to the suspensions (13) and/or to the second tank section (9).

4. Vehicle in accordance with claim 1, **characterised in that** the suspensions (13) are a component of the second tank section (9) or are fastened to the tank section (9) as a separate component by means of a screw connection, adhesion, riveting, welding or a clip connection or similar.

5. Vehicle in accordance with one of claims 1 to 4, **characterised in that** the separate inner tank (5) is temperature-insulated with regard to its environment by an intermediate space (6) formed between the inner tank (5) and the second tank section (9), and that, if necessary, additional insulation material is arranged in this intermediate space (6).

6. Vehicle in accordance with claim 5, **characterised in that** a heater (10) is provided for heating the reducing agent in the tank either in the separate inner tank (5) or in the intermediate space (6) between the separate inner tank (5) and the second tank section (9).

7. Vehicle in accordance with one of the claims 1 to 6, **characterised in that** at least the separate inner tank (5) contains filling and removal units (4) and, if necessary, return systems (21) and, if necessary, a sensor (11), for example for tank gauges or temperature measurements.

8. Vehicle in accordance with claim 7 and claim 5, **characterised in that** the sensor (11) is arranged in the area of the intermediate space (6).

9. Vehicle in accordance with claims 2 to 8, insofar as they are dependent on claim 2, **characterised in that** the separate end cover (7) which seals the open second tank section (9) is connected to the open second tank section (9) either in a detachable fashion or, in the case of the separate end cover (7), in a permanent fashion.

10. Vehicle in accordance with claims 1 to 9, **characterised in that** further third tank sections (20) of different filling types are connected at the ends of the first and/or second tank sections (3, 9).

11. Vehicle in accordance with claims 1 to 10, **characterised in that** at least the first and the second tank sections (3, 9) either form a single component or are designed as individual components that are connected to each other.

12. Vehicle in accordance with claims 1 to 11, insofar as they are dependent on claim 2, **characterised in that** an aperture is provided either on the end or on the circumference of the second open tank section (9) for mounting the separate inner tank (5), which aperture can be locked by the end cover (7).

13. Vehicle in accordance with claims 1 to 12, **characterised in that** the vehicle is designed as a truck or as a bus/coach.

## Revendications

1. Véhicule motorisé avec un moteur à combustion interne qui peut être alimenté en carburant à partir d'une chambre à carburant (K), une installation d'épuration des gaz d'échappement pouvant fonctionner avec un agent de réduction, qui est prévue pour épurer les gaz d'échappement du moteur á combustion interne, et une chambre à agent de réduction (R) prévue pour stocker l'agent de réduction, qui est rassemblée avec la chambre à carburant (K) pour former une unité de construction (1), auquel cas une première partie de réservoir fermée (3) est prévue comme chambre à carburant (K) à au moins une extrémité côté frontal de laquelle est raccordée une deuxième partie de réservoir ouverte d'un côté (9) qui est prévue comme endroit pour recevoir un réservoir intérieur (5) séparé formant la chambre à agent de réduction (R), **caractérisé en ce que** le réservoir intérieur séparé (5) est fixé et attaché dans une position accrochée au moyen de suspensions (13) prévues dans la deuxième partie de réservoir (9), auquel cas les suspensions (13) sont disposés dans la zone supérieure de la deuxième partie de réservoir (9) et le réservoir intérieur séparé (5) présente des creux (18) aménagés qui correspondent au moins par zone de manière adhérente avec les profilés de maintien formés sur les suspensions (13).

2. Véhicule motorisé selon la revendication 1, **caractérisé en ce que** la partie de réservoir ouverte d'un côté (9) peut être obturée au moyen d'un couvercle de fermeture séparé (7).

3. Véhicule motorisé selon la revendication 1 ou 2, **caractérisé en ce que** des moyens de fixation supplémentaires (15) sont prévus et permettent de fixer le réservoir intérieur séparé (5) sur les suspensions (13) et/ou sur la deuxième partie de réservoir (9).

4. Véhicule motorisé selon la revendication 1, **caractérisé en ce que** les suspensions (13) font partie de la deuxième partie de réservoir (9) ou bien sont fixés comme composant séparé sur la partie de réservoir (9) par vissage, collage, rivetage, soudage, clipsage ou par une liaison similaire.

5. Véhicule motorisé selon une des revendications 1 à 4, **caractérisé en ce que** le réservoir intérieur séparé (5) est isolé à la température par rapport à son environnement grâce à un espace intermédiaire (6) formée entre le réservoir intérieur (5) et la deuxième partie de réservoir (9), et **en ce qu'**un matériau isolant est disposé si nécessaire en supplément dans cet espace intermédiaire (6).

6. Véhicule motorisé selon la revendication 5, **caractérisé en ce qu'**un chauffage (10) est prévu pour réchauffer l'agent de réduction contenu soit dans le réservoir intérieur séparé (5), soit dans l'espace intermédiaire (6) entre le réservoir intérieur séparé (5) et la deuxième partie de réservoir (9).

7. Véhicule motorisé selon une des revendications 1 à 6, **caractérisé en ce qu'**au moins le réservoir intérieur séparé (5) présente des unités de remplissage et de prélèvement (4) et, le cas échéant, des systèmes de retour (21) et, le cas échéant, un capteur (11), par exemple pour transmettre le niveau dans le réservoir ou pour mesurer la température.

8. Véhicule motorisé selon les revendications 5 et 7, **caractérisé en ce que** le capteur (11) est disposé dans la zone de l'espace intermédiaire (6).

9. Véhicule motorisé selon une des revendications 2 à 8, si dépendant de la revendication 2, **caractérisé en ce que** le couvercle d'obturation séparé (7) fermant la deuxième partie de réservoir ouverte (9) peut être desserré ou, dans le cas du couvercle d'obturation séparé (7), est relié à la deuxième partie de réservoir ouverte (9) de manière fixe.

10. Véhicule motorisé selon une des revendications 1 à 9, **caractérisé en ce que** d'autres troisièmes parties de réservoir (20) de type de remplissage différent peuvent être raccordés en bout de la première et/ou de la deuxième partie de réservoir (3, 9).

11. Véhicule motorisé selon une des revendications 1 à 10, **caractérisé en ce que** les première et deuxième parties de réservoir (3, 9) soit forment un composant commun, soit sont formées comme composants individuels reliés entre eux.

12. Véhicule motorisé selon une des revendications 1 à 11, si dépendant de la revendication 2, **caractérisé en ce que**, dans le cas de la deuxième partie de réservoir ouverte (9), une ouverture est prévue pour recevoir le réservoir intérieur séparé (5) soit en bout, soit sur sa circonférence et peut être fermée par le couvercle d'obturation (7).

13. Véhicule motorisé selon une des revendications 1 à 12, **caractérisé en ce que** le véhicule motorisé est un camion ou un bus.
